# EUROPÄISCHE PATENTANMELDUNG

(11) **EP 0 888 837 A2**
(43) Veröffentlichungstag der Anmeldung: **07.01.1999**
(21) Anmeldenummer: 98112071.0
(22) Anmeldetag: 30.06.1998
(51) Int. Cl.: B21H 1/18, B21K 1/60

(54) **Verfahren zum Herstellen von Befestigungselementen**

(30) Priorität: 04.07.1997 DE 19728736
(71) Anmelder: Rivet Technology (P) Ltd., Bangalore - 25 (IN)
(72) Erfinder: Singh, Jayajit, Bangalore - 25 (IN); Ummat, Naresh, New Delhi - 28 (IN)
(74) Vertreter: Wehnert, Werner, Dipl.-Ing. Patentanwälte Hauck, Graalfs, Wehnert, Döring, Siemons

(57) **Zusammenfassung**

Die Erfindung betrifft ein Verfahren zum Herstellen von rotationssymmetrischen Befestigungselementen mit Hohlprofil, wie Stanznieten, Stanzbolzen, Dübeln usw., die in einem Walzvorgang hergestellt werden, wobei in einem Walzvorgang Werkstoff des Rohlings in radialer und axialer Richtung zum Fließen gebracht und damit ein Fertigteil ausgeformt wird, das ein Hohlprofil aufweist. Zusätzlich kann ein Innendorn verwendet werden, der dann die Geometrie des Hohlprofils bestimmt. Die durch Walzen hergestellten Fertigteile lassen sich wesentlich billiger und erheblich schneller als mit den bekannten Umformprozessen, nämlich Stauchen und Fließpressen, herstellen und besitzen darüber hinaus einen überlegenen Faserverlauf des Werkstoffes und eine bessere Maßhaltigkeit.

## Beschreibung

Die Erfindung betrifft ein Verfahren zum Herstellen von Befestigungselementen gemäß dem Oberbegriff des Patentanspruchs 1.

Mit dem erfindungsgemäßen Verfahren sollen Befestigungselemente hergestellt werden, die mit einem hohlen Innenprofil versehen sind. Typische Beispiele sind Stanznieten oder Stanzbolzen, bei denen am Kopf ein hohler Schaft angeformt ist, sowie Dübel, insbesondere Spreizdübel mit Innengewinde oder auch andere Kleinteile mit einem hohlen Innenprofil, wobei es sich bei dem Profil um eine durchgehende Bohrung oder nur um ein Blindloch handeln kann.

Nach dem Stand der Technik werden solche Befestigungselemente durch Stauchen und Fließpressen eines Drahtstücks in mehreren Stufen hergestellt. Dieses Verfahren erfordert viele Werkzeuge und die Übergabe von einer zur anderen Station erfordert Zeit. Insbesondere aber ist dieses Verfahren in Bezug auf die Tiefe und Geometrie des hohlen Innenprofils erheblichen Einschränkungen unter worfen, da die Umformung des Rohlings mit seinem Innenprofil mit Hilfe eines Dorns erfolgen muß. Die Fertigteile sind von den Dornen wegen der Selbsthemmung besonders bei konischen, engen Bohrungen schwer zu entfernen und bei längeren Dornen fehlt die erforderliche Festigkeit und Stabilität. Ferner hat sich beim konventionellen Herstellungsverfahren gezeigt, daß die Fertigteile Risse aufweisen können, bei Stanznieten die Schneiden am Fußende des Hohlschafts undefiniert ausgeformt oder nicht scharfkantig sind, so daß der Schaftbereich ungewollt gestaucht und geknickt werden kann, wodurch die Verbindungseigenschaften verschlechtert sind und schließlich nur bestimmte Werkstoffe verarbeitet werden können, die das erforderliche Fließverhalten aufweisen. So können beispielsweise Fertigteile aus V4A- oder V2A-Stahl nicht wirtschaftlich hergestellt werden.

Somit liegt der Erfindung die Aufgabe zugrunde, ein Herstellungsverfahren für Befestigungselemente anzugeben, mit dem die vorstehenden Nachteile vermieden sind. So sollen Befestigungselemente mit hohlem Innenprofil herstellbar sein, die hinsichtlich der Profiltiefe und Profilgeometrie nicht den bekannten, oben geschilderten Einschränkungen unterworfen sind, ferner soll das Herstellverfahren verein-facht und damit verbilligt werden, der Ausstoß pro Zeiteinheit erhöht werden, die Qualität und Maßhaltigkeit der Fertigteile soll verbessert werden und ferner sollen auch Befestigungselemente aus Werkstoffen hergestellt verden, die bisher nicht wirtschaftlich fließgepreßt werden konnten.

Die genannte Aufgabe ist erfindungsgemäß durch die Merkmale des Patentanspruchs 1 gelöst. Vorteilhafte Weiterbildungen sind in den Unteransprüchen gekennzeichnet.

Erfindungsgemäß wird von einem Rohling ausgegangen, in der Regel von einem kalibrierten abgelängten Drahtstück. Die Stirnseiten des Rohlings können plan sein, es kann aber auch an einer Stirnseite eine Eintiefung eingepreßt werden. Dies erfolgt durch Stauchen bzw. Fließpressen.

Anschließend erfolgt die Umformung des Rohlings zum Fertigteil durch Walzen. Mit Hilfe des Walzprofils in, Walzspalt wird ein Hohlprofil des Fertigteils ausgewalzt, in dem beim Walzvorgang Werkstoff des Rohlings radial nach innen und in axialer Richtung des Rohlings zum Fließen gebracht wird. Auch bei einem Rohling mit planer Stirnfläche entstellt so ein Befestigungselement mit hohlem Innenprofil.

Ist andererseits der Rohling vorgeformt, nämlich mit einer Eintiefung in der Stirnseite versehen, so wird von dieser Eintiefung ausgehend das Hohlprofil des Fertigteils ausgewalzt, wobei wiederum Werkstoff aus dem radial außerhalb der Eintiefung gelegenen Bereich des Rohlings in axialer Richtung zum Fließen gebracht und damit der Rohling axial verlängert wird, bis die Endform des Fertigteils erzielt ist. Dabei entsteht anschließend an die ursprüngliche Eintiefung das Hohlprofil des Befestigungselementes.

Die Eintiefung im Rohling wird sich insbesondere dort als vorteilhaft erweisen, wo Fertigteile mit dünnwandigem Schaft oder auch mit einem großen Verhältnis von Länge zum Durchmesser gewalzt werden sollen.

Beim Walzen handelt es sich um einen einstufigen Formvorgang, d.h. in einem einzigen Durchgang durch das Walzenpaar wird der Rohling in das Fertigteil umgeformt. Dies setzt voraus, daß das Walzenpaar einen Profilverlauf aufweist, der sich ausgehend vom Profil des Rohlings kontinuierlich zum Profil des Fertigteils verändert.

Für den Walzvorgang sind mehrere Verfahren geeignet, nämlich linear zueinander verschiebbare Walzbacken, in deren einander zugekehrten Stirnseiten das erforderliche, stetig verlaufende Walzprofil eingearbeitet ist, wie auch Segmentwalzbacken oder ein Walzenpaar, das ebenfalls an seinem Außenumfang mit dem stetig verlaufenden Profil versehen ist und bei dem im Walzenspalt gegenüber der die Rotationsachsen der beiden Walzen schneidende Ebene um einen Abstand versetzt ein stationäres Lineal angeordnet ist, an dem der zu walzende Gegenstand anliegt und von den am Umfang der Walzen auftretenden Kräften auf das Lineal gedrückt wird. Solche Walzanordnungen sind bekannt und verden beim Stand der Technik zum Walzen von Außenprofilen wie Gewindestangen und Schrauben vielseitig verwendet. Ein wesentlicher Unterschied zum erfindungsgemäßen Verfahren besteht aber darin, daß bei letzterem ein Hohlprofil ausgewalzt wird.

Das erfindungsgemäße Verfahren kann mit oder ohne Dorn ausgeführt werden. So wurde bereits erläutert, daß ein hohles Innenprofil des Fertigteils ausgewalzt werden kann. Will man aber eine in bestimmter Weise definierte Geometrie des Innenprofils erhalten, so ist es zweckmäßig, einen sich mitdrehenden Dorn zu verwenden, der in Axialrichtung federnd gelagert ist und dabei in die Eintiefung des Rohlings gedrückt wird. Dann wird beim Walzen das sich in Längsrichtung fließende Material um den sich mitdrehenden Dorn herum geformt und kann das Innenprofil eine vom Dom bestimmte Geometrie erhalten. Bei der Verwendung eines derartigen Dorns treten keine Probleme beim Abziehen des Fertigteils vom Dorn auf.

Andererseits lassen sich mit dem erfindungsgemäßen Verfahren auch durchgehende Bohrungen im Fertigteil erzielen. Dazu wird von einem Rohling mit einem Loch ausgegangen. Die Umformung zum Fertigteil erfolgt im Walzvorgang, bei dem ebenfalls der Werkstoff des Rohlings in axialer und radialer Richtung zum Fließen gebracht wird, bis beispielsweise ein Fertigteil mit einer durchlaufenden Bohrung hergestellt ist. Es empfiehlt sich, für diesen Walzvorgang einen Innendorn zu verwenden, der für eine zylindrische Bohrung sorgt. Der Innendorn kann ein Außengewinde aufweisen, so daß das Fertigteil mit einem Innengewinde beim Walzen versehen wird. Die Außenseite des Fertigteils kann ferner zylindrisch sein oder ein Polygonprofil erhalten.

Insbesondere bei Stanznieten oder Stanzmuttern soll das Volumen des Rohlings, abhängig vom Durchmesser und der Länge des Rohlings grundsätzlich größer sein als das Volumen für die Herstellung des Fertigteils. Der Volumenüberschuß soll zwischen 0,5% und 2% betragen. Auf diese Weise ist durch den Volumenüberschuß beim Walzen gewährleistet, daß die Länge des Fertigteils annähernd konstant gehalten wird, während der beim Rohling vorgesehene Volumenüberschuß zu einer geringen Volumenvergrößerung am Fertigteil führt, beispielsweise am Kopf des Fertigteils, wo die Maßhaltigkeit keine große Rolle spielt. Auf diese Weise lassen sich die Fußenden gerade von Stanznieten definiert gestalten und scharfkantig, so daß sie sich für den Schneidvorgang beim Setzen der Stanzniet besonders eignen.

Die Erfindung wird nachstehend anhand der Zeichnung näher erläutert; alle Darstellungen sind Schnitte in Längsrichtung. Es zeigen:
Fig. 1A eine Matrize zum Fließpressen eines Rohlings;
Fig. 1B eine Matrize mit fertiggepreßtem Rohling;
Fig. 2A einen Rohling für einen Stanzniet;
Fig. 2B den aus dem Rohling der Fig. 1A gefertigten Stanzniet;
Fig. 3A einen Rohling für einen Stanzbolzen;
Fig. 3B einen aus dem Rohling der Fig. 3A gefertigten Stanzbolzen;
Fig. 4 eine perspektivische Ansicht einer Walzbacke;
Fig. 5 ein Walzbacken-Paar zur Herstellung eines Stanzniets entsprechend Fig. 2B;
Fig. 6 ein Walzbacken-Paar zur Herstellung eines Stanzniets aus einem Rohling ohne Eintiefung;
Fig. 7 ein Walbacken-Paar mit mitdrehendem Dorn zur Herstellung eines Stanzbolzens entsprechend Fig. 3B;
Fig. 8A einen Rohling für einen Dübel;
Fig. 8B einen aus dem Rohling der Fig. 3A gefertigten Dübel;
Fig. 9A und 9B je eine Seitenansicht eines Stanzniets mit angewalztem Außenprofil und
Fig. 10 einen Schnitt durch das Außenprofil des Stanzniets in Pfeilrichtung B der Fig. 9A.

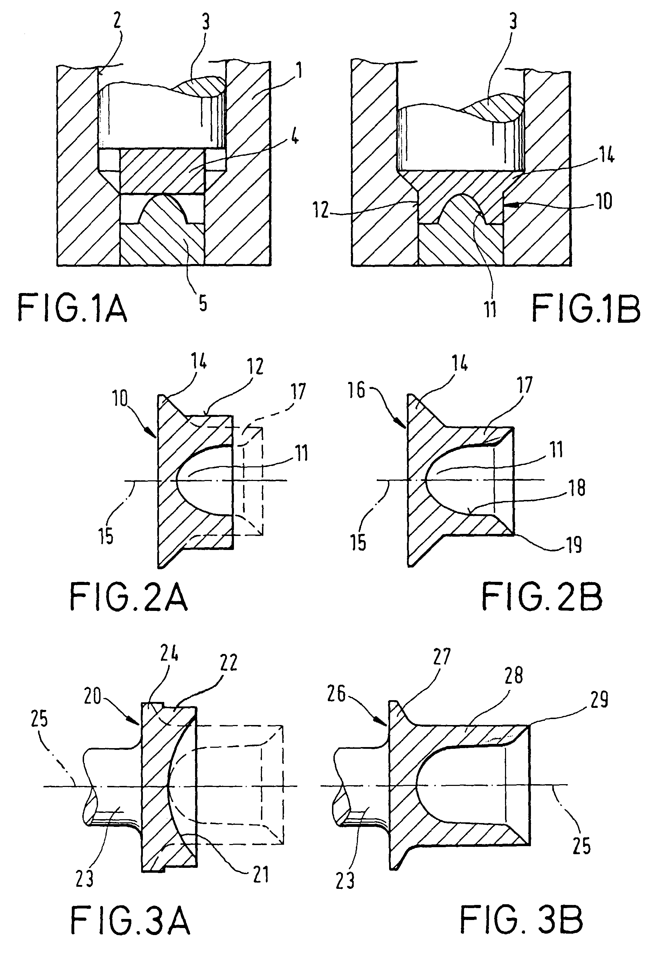

In Fig. 1A ist eine Matrize 1 mit einen, in einer Bohrung 2 verschiebbaren Stempel 3 dargestellt. Ein abgelängtes Drahtstück 4 wird in die Matrize 1 angesetzt, an deren Boden ein Aauswerfer mit Dorn 5 angeordnet ist. Durch Vorschieben des Stempels 3 wird das Drahtstück zudem in Fig. 1B dargestellten Rohling 10 umgeformt, d.h. mit Hilfe des Dorns 5 bildet sich eine bei 11 eingestellte Eintiefung aus, die zentrisch zum zylindrischen Außenumfang 12 liegt, an dem ein Flansch 14 angeformt ist.

Es entsteht somit der in Fig. 2A im Schnitt dargestellte Rohling 10, dessen Längsachse mit 15 bezeichnet ist.

Anschließend wird der Rohling 10 gewalzt und erhält dadurch das in Fig. 2B dargestellte Profil des fertigen Stanzniets 16. Ein Querschnittsvergleich mit dem Rohling 10 der Fig. 2A ergibt, daß durch das Walzen Werkstoff im Bereich des zylindrischen Schaftes 12 des Rohlings radial außerhalb der Eintiefung 11 radial nach innen und im wesentlichen in Längsrichtung 15, also axial ausgewalzt wird und damit ausgehend von der Eintiefung 11 ein Hohlschaft 17 ausgewalzt wird. In Fig. 2A ist der Hohlschaft 17 in gestrichelten Linien eingezeichnet, uni die Umformung des Rohlings in den Stanzniet zu verdeutlichen. Die Innengeometrie des Hohlprofils, insbesondere der konische Verlauf, 18 bestimmt sich abhängig von der Geometrie des Rohlings 10, und abhängig von der Profilierung des Walzwerkzeuges.

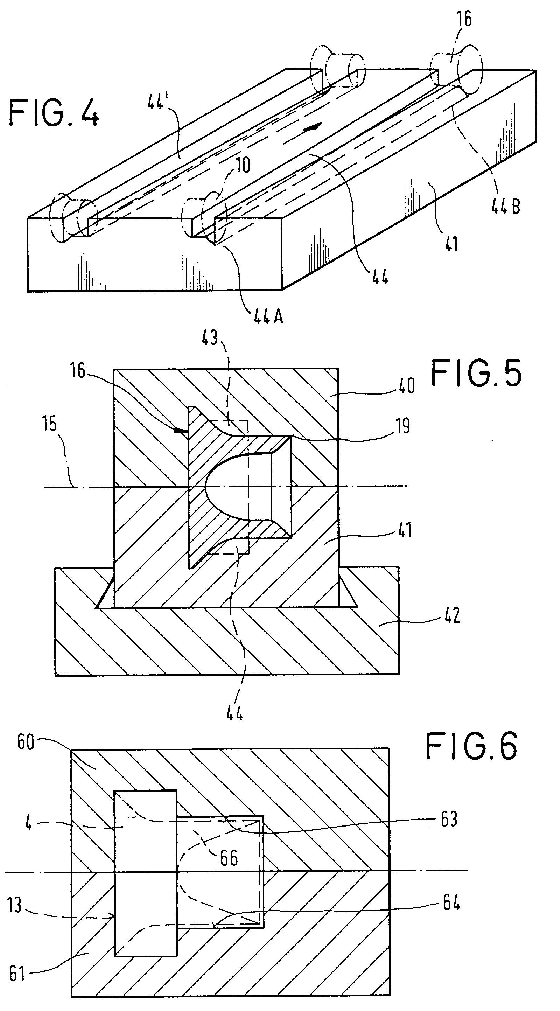

Ein Walzwerkzeug zur Herstellung des Stanzniets 16 ist in den Fig. 4 und 5 dargestellt. In Fig. 5 ist eine untere Walzbacke 41 stationär in einem Futter 42 befestigt und eine obere Walzbacke 40 ist mit Hilfe einer nicht dargestellten, aber bekannten Antriebseinrichtung linear hin und her beweglich angetrieben und führt damit eine zur Papierebene senkrechte Bewegung aus.

Beide Walzbacken sind mit einem kontinuierlichen, in Langsrichtung, also senkrecht zur Papierebene verlaufenden Walzprofil 43, 44 versehen.

Fig. 4 zeigt perspektivisch die untere Walzbacke 41 mit den, an ihrer Oberseite eingearbeiteten Walzprofil 44. Die Anfangsgeometrie 44A des Profils 44 entspricht dem an dieser Stelle einzusetzenden Rohling 10 und die Profilgeometrie 44B am Auslauf entspricht dem fertigen Stanzniet 16. Die obere nicht dargestellte Walzbacke 40 weist ein entsprechendes Walzprofil auf. Aus Fig. 4 geht ferner hervor, daß jede Walzbacke 40, 41 mit zwei oder auch mehreren Profilen 44 und 44' versehen sein kann.

Es wird also die Außengeometrie des Stanzniets 16 durch das Profil der Walzbacken an ihrem Auslaufbestimmt. Die Innengeometrie der Hohlpro-fils 18 ist von der Geometrie des Rohlings 10 und von dem Profilverlaufin den Walzbacken als Funktion der Länge ab-hängig. Walzbacken mit gleicher Profilgeometrie am Auslauf, jedoch mit unterschiedlichem Profilverlauf zwischen Anfang und Auslauferzeugen Hohlprofile 18 mit unterschiedlichen Innengeometrien. Zum Herstellen eines Fertigteils mit bestimmten Maßen, aus denen sich ein bestimmtes Volumen des Fertigteils ergibt, muß das Volumen des Rohlings größer sein. Der Volumenüberschuß muß ≥ 0,5% und ≤ 2,0% sein. So wird eine saubere Schneidkante 19 (Fig. 2B) am Ende des Hohlschaftes 17 erzielt.

Mit den in Fig. 5 dargestellten Walzbacken läßt sich ein Stanzniet 16 walzen, bei dem der Querschnitt des Hohlschaftes 17 zum Kopf 14 hin ansteigt. Die Schneidkanten 19 sind definiert gestaltet und scharfkantig, so daß sie beim Einsetzen des Stanznietes das Oberblech mit einem Minimum an Verzug durchschneiden.

Fig. 3A zeigt einen Rohling 20 mit einem anderen Querschnittsprofil, nämlich einen Kragen 24 am Außenumfang und anschließend radial nach innen abgesetzt einen zylindrischen Umfang 22 sowie eine schalenförmige Eintiefung 21. Soll ein Stanzbolzen hergestellt werden, so ist der Rohling 20 mit einem Bolzenschaft 23 versehen. Die Längsrichtung des rotationssymmetrischen Rohlings 20 ist mit 25 bezeichnet.

Fig. 3B zeigt den ausgewalzten, fertigen Stanzbolzen 26, an dem ein Kopf 27 durch Walzen entstanden ist, sowie in Längsrichtung 25 ein Hohlschaft 28 mit durch einen Dorn bestimmten Innengeometrie. Das scharfkantige Fußende des Hohlschafts 28 ist wiederum mit 29 bezeichnet.

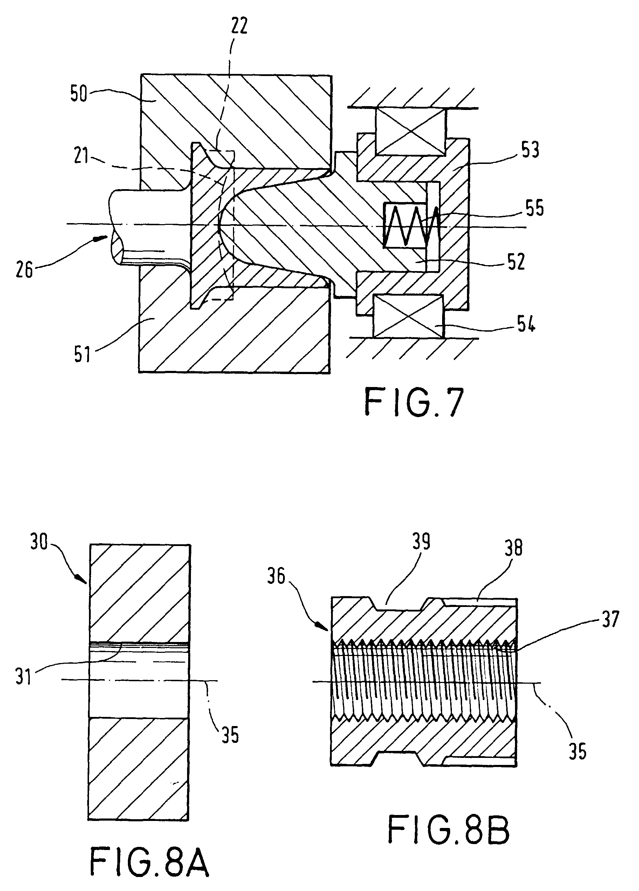

Ein Walzbacken-Paar 50, 51 mit entsprechendem Anfangs- und Auslaufprofil ist in Fig. 7 dargestellt. Die beiden Walzbacken sind wiederum in einer zur Papierebene senkrecht liegenden Achse gegeneinander verschiebbar angetrieben. In die Eintiefung 21 des Rohlings 20 greift ein Dorn 52, der in einem Futter 53 verschiebbar, aber unverdrehbar gelagert ist. Das Futter 53 sitzt in einen, Lager 54 und ist damit frei drehbar. Der Dorn 52 wird von einer Feder 55 in die Eintiefung 21 gedrückt. Beim Walzen fließt der Werkstoff aus dem Schaftbereich 22 des Rohlings in den Spalt zwischen dem Profil der Walzbacken 50, 51 und dem Dorn 52 ein. So wird die Geometrie der Bohrung in, Stanzbolzen durch die Geometrie des Dorns 52 bestimmt. Die notwendige Längsverschiebung des Dorns kann von einem Antrieb gesteuert sein oder erfolgt durch die auftretenden Reibungskräfte beim Aufwalzen des Werkstoffes auf den Dorn. In Fig. 7 ist der Dorn mit Hilfe der Feder 55 vorgespannt und kann mit fortschreitendem Walzprofil durch Zusammendrücken der Feder in Längsrichtung verschoben werden.

In Fig. 6 ist ein Schnitt durch ein Walzbacken-Paar 60, 61 dargestellt. Die untere stationäre Walzbacke 61 weist ein Walzprofil 64 und die obere verschiebbare Walzbacke 60 das korrespondierende Walzprofil 63 auf. Mit diesem Walzbacken-Paar 60, 61 läßt sich wiederum ein Stanzniet 66 auswalzen, ausgehend von einem zylindrischen Rohling 4, der entsprechend Fig. 1A aus einem abgelängten Drahtstück besteht. Im Verlauf des Walzprofils bildet sich wiederum ausgehend von dem Rohling 4 mit planer Stirnfläche 13 ein Fertigteil 66 mit konischem Hohlprofil aus, wie es in Fig. 6 in gestrichelten Linien dargestellt ist.

In Fig. 8A ist ein Rohling 30 zur Herstellung eines in Fig. 8B dargestellten Dübels 36 gezeigt. Hier ist die Eintiefung 31 in Form eines durchgehenden Loches ausgebildet. Das Umformen des Rohlings 30 in den Dübel 36 erfolgt wiederum durch Walzen mit Hilfe eines Innendorns, der an seinen, Außenumfang ein Gewinde tragt und der vor den, Walzen in das durchgehende Loch 31 eingeschoben wird. Hierauf erfolgt der Walzvorgang und das Auswalzen des Rohlings 30 in Längsrichtung durch Fließen des Werkstoffes zwischen dem Innendorn und dem Walzprofil. Auf diese Weise erhält der Dübel 36 ein Innengewinde 37, am Außen-umfang eine Rändelung 38 und beispielsweise einen Sechskant im Umfangsabschnitt 39 zum Ansetzen eines Werkzeuges. Als Walzwerkzeug läßt sich beispielsweise die in Fig. 7 dargestellte Vorrichtung verwenden. Der dort gezeigte Dorn 52 wird durch einen Gewindedorn ersetzt.

Es ist möglich, am Außenumfang des Hohlschaftes 17 (Fig. 2B) bzw. 28 (Fig. 3B) ein Profil P zu walzen, das z.B. polygonal ist oder mit in Umfangsrichtung aufeinanderfolgenden Erhöhungen und Vertiefungen versehen ist, um in diesem Bereich eine höhere Festigkeit des Niet-schaftes dort zu erzielen, wo beim Setzen des Nietes starke Verformungen des Nietschaftes beim Aufspreizen eintreten. Eine derartige Ausgestaltung ist von großer Bedeutung für die Tragfähigkeit von Nietverbindungen, weil dadurch die spezifische Flächenpressung des Nietes herabgesetzt wird. Das Profil reicht nur über einen Teil der Länge des Nietschaftes.

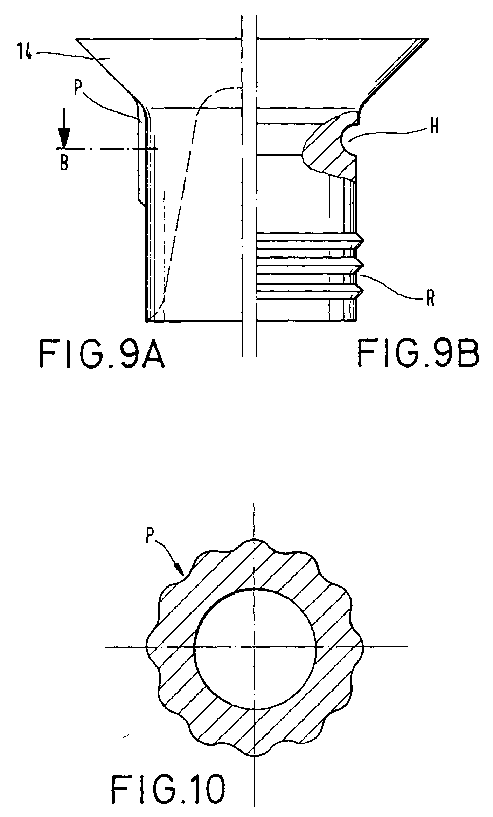

Fig. 9A und 10 zeigen ein unterhalb des Kopfes 14 angewalztes Polygonalprofil P, während Fig. 9B eine angewalzte Rändelung R zeigte Sinngemäß sind auch andere äußere und innere Profile am Hohlschaft herstellbar. So können auch hinterschnittene Profile hergestellt werden. Ein solches Profil zeigt beispielsweise Fig. 9B bei H.

## Patentansprüche

1. Verfahren zum Herstellen von Befestigungselementen, bei dem ein Rohling in ein Fertigteil umgeformt wird, das ein hohles Innenprofil hat, dadurch gekennzeichnet, daß der Rohling durch Walzen zum Fertigteil umgeformt wird, indem der Rohling durch Fließen von Werkstoff radial nach innen und in axialer Richtung verlängert wird, und dabei hohle das Innenprofil und das Außenprofil des Fertigteils ausgewalzt werden.

2. Verfahren nach Anspruch 1, dadurch gekennzeichnet, daß das Auswalzen des Rohlings an dessen planer Stirnfläche vorgenommen wird.

3. Verfahren nach Anspruch 1, dadurch gekennzeichnet, daß der Rohling mit einer stirnseitigen Eintiefung hergestellt wird und der Rohling durch Fließen von radial außerhalb der Eintiefung vorhandenem Werkstoff ausgehend von der Eintiefung radial nach innen in axialer Richtung verlängert wird.

4. Verfahren nach Anspruch 3, dadurch gekennzeichnet, daß die Eintiefung am Rohling kappenförmig ausgebildet wird.

5. Verfahren nach Anspruch 3, daß die Eintiefung am Rohling schalenförmig wird.

6. Verfahren nach Anspruch 3, dadurch gekennzeichnet, daß die Eintiefung am Rohling in Form eines durchgehenden zylindrischen Loches ausgebildet wird.

7. Verfahren nach einem der Ansprüche 1 bis 6, dadurch gekennzeichnet, daß der Rohling durch Stauchen und/ oder Fließpressen hergestellt wird.

8. Verfahren nach einem der Ansprüche 1 bis 7, dadurch gekennzeichnet, daß am Rohling und/oder am Fertigteil ein Kopf angeformt wird.

9. Verfahren nach Anspruch 6 oder 8, dadurch gekennzeichnet, daß als Kopf ein radial überstehender Flansch angeformt wird.

10. Verfahren nach einem der Ansprüche 1 bis 9, dadurch gekennzeichnet, daß an einem Umfangsabschnitt des Fertigteils durch Walzen ein mehrkantiges Profil angeformt wird.

11. Verfahren nach einem der Ansprüche 1 bis 9, dadurch gekennzeichnet, daß durch Walzen eine Rändelung angeformt wird.

12. Verfahren nach einem der Ansprüche 1 und 9, dadurch gekennzeichnet, daß bei der Herstellung einer Stanzniet als Fertigteil am Außenumfang des Nietschaftes ein die Festigkeit des Nietschaftes erhöhendes Profil beim Walzen angeformt wird.

13. Verfahren nach einem der Ansprüche 1 bis 12, dadurch gekennzeichnet, daß beim Walzen zum Ausformen des hohlen Innenprofils ein Innendorn verwendet wird.

14. Verfahren nach Anspruch 13, dadurch gekennzeichnet, daß beim Walzen das Stirnende des Innendorns in der Eintiefung des Rohlings gehalten wird.

15. Verfahren nach Anspruch 5 und 13, dadurch gekennzeichnet, daß der Innendorn mit einem Außengewinde versehen ist und in dem Fertigteil ein Innengewinde eingeformt wird.

16. Verfahren nach einem der Ansprüche 13 bis 15, dadurch gekennzeichnet, daß der Innendorn in Axialrichtung federnd gelagert wird.

17. Verfahren nach einem der Ansprüche 1 bis 16, dadurch gekennzeichnet, daß für den Walzvorgang linear gegenläufig angetriebene Walzbacken verwendet werden.

18. Verfahren nach einem der Ansprüche 1 bis 16, dadurch gekennzeichnet, daß für den Walzvorgang rotierende Walzrollen mit einem Lineal im Walzenspalt verwendet werden.

19. Verfahren nach einem der Ansprüche 1 bis 18, dadurch gekennzeichnet, daß zur Ausformung der axialen Länge des Fertigteils in, Walzvorgang der Rohling mit einem Volumenüberschuß hergestellt wird.

20. Verfahren nach Anspruch 17 oder 18, dadurch gekennzeichnet, daß die Walzbacken und Walzrollen mit zwei oder mehreren Profilen zum gleichzeitigen Walzen mehrerer Fertigteile versehen werden.
